# EUROPEAN PATENT SPECIFICATION

(11) **EP 2 544 265 B1**
(45) Date of publication and mention of the grant of the patent: **26.02.2014**
(21) Application number: 12162741.8
(22) Date of filing: 30.03.2012
(51) Int. Cl.: H01M 2/34, H01H 85/36, H01M 2/06, H01M 4/70, H01M 10/04, H01M 2/26, H01M 2/02, H01M 2/12, H01M 2/30

(54) **Rechargeable battery**
Wiederaufladbare Batterie
Batterie

(30) Priority: 06.07.2011 US 201161504885 P; 19.01.2012 US 201213353503
(43) Date of publication of application: 09.01.2013
(73) Proprietor: Samsung SDI Co., Ltd., Gyeonggi-do (KR); Robert Bosch GmbH, 70442 Stuttgart (DE)
(72) Inventor: Kim, In, Gyeonggi-do (KR); Kim, Duk-Jung, Gyeonggi-do (KR); Kim, Hyung-Sik, Gyeonggi-do (KR); Kim, Jeong-Jun, Gyeonggi-do (KR); Park, Zin, Gyeonggi-do (KR)
(74) Representative: Mounteney, Simon James

(56) References cited:
- EP-A1- 2 395 576
- WO-A1-2010/133176
- JP-A- 5 274 994
- KR-B1- 101 036 070
- US-A- 5 258 238
- US-A1- 2005 122 203
- US-A1- 2008 297 301

## Description

### BACKGROUND

### 1. Field

The present invention relates generally to a rechargeable battery, and more particularly, to a rechargeable battery including a structure capable of reducing a risk such as an explosion of the rechargeable battery, or the like, at the time of generation of overcurrent in the rechargeable battery.

### 2. Description of the Related Art

A rechargeable battery is a battery that can be recharged and discharged, unlike a primary battery that cannot be recharged.

A low-capacity rechargeable battery is used for small portable electronic devices such as a mobile phone, a notebook computer, and a camcoder and a large-capacity rechargeable battery is used as a power supply for driving a motor of a hybrid car, or the like, or a large-capacity power storage device.

Recently, a high-output rechargeable battery using a non-aqueous electrolyte solution of high energy density has been developed. The high-output rechargeable battery is configured of a large-capacity battery module in which a plurality of rechargeable batteries are connected to each other in series so as to be used to drive a motor of devices requiring large power, for example, an electric car, or the like. The rechargeable battery may have a cylindrical shape, a squared shape, or the like.

Further, in order to prevent the rechargeable battery from exploding due to generation of overcurrent in the rechargeable battery, a safety apparatus including a fuse part may be installed in the rechargeable battery. However, a problem that the fuse part is partially fused or fractured due to the overcurrent, or the like, generated in the rechargeable battery may occur. Therefore, when fractured surfaces of the fuse part are too close to each other to block electricity, an abnormal phenomenon such as arc generation, or the like, may occur. In addition, since the fractured surfaces of the fuse part may only be partially fractured, the overcurrent may still flow in the rechargeable battery and it can consequently explode.

The above information disclosed in this Background section is only for enhancement of understanding of the background of the described technology and therefore it may contain information that does not form the prior art that is already known in this country to a person of ordinary skill in the art.

US 2008/297301 A1 discloses a high voltage fuse wherein a spring pulls apart ends of a wire between a terminal and a fuse element and separates them as far as the spring and housing allow.

KR 101036070 B1 discloses a secondary battery comprising a fuse part electrically connected between a terminal junction part and an electrode assembly-junction part to prevent explosions or discharges and to cut off excessive currents during a short circuit of members caused by an inner pressure increase.

The documents US 2008/297301 A1 and KR 101036070 B1 are part of the prior art according to Article 54(1) and (2) EPC.

EP 2 395 576 A1 describes a secondary battery comprising a fuse part electrically connected between a terminal junction and an electrode assembly-junction part to prevent explosions or discharges and to cut off excessive currents during a short-circuit. Said fuse part comprises a fuse hole and an insulating member is inserted into said fuse hole. The document EP 2 395 576 A1 falls under Article 54(3) EPC and is therefore not relevant to the question of inventive step.

### SUMMARY

The present invention sets out to provide a rechargeable battery including a structure capable of maintaining a distance so that fractured surfaces of a fuse part formed when the fuse part is fused or fractured due to generation of overcurrent in the rechargeable battery are not electrically connected to each other.

Accordingly, the invention provides a rechargeable battery as set out in Claim 1. Preferred features of the invention are set out in Claims 2 to 13.

According to embodiments of the invention, a distance between surfaces of the fuse part that are fractured due to the overcurrent may therefore be sufficiently maintained, so that an abnormal phenomenon such as an arc, or the like, does not occur.

### BRIEF DESCRIPTION OF THE DRAWINGS

FIG. 1 is a perspective view of a rechargeable battery according to a first embodiment of the invention.
FIG. 2 is a cross-sectional view taken along line II-II in FIG. 1.
FIG. 3 is an exploded perspective view of part of the rechargeable battery of FIG. 1.
FIG. 4 is a cross-sectional view taken along line IV-IV in FIG. 3.
FIGS. 5A and 5B are perspective views of an elastic structure according to the invention.
FIG. 6 is an exploded perspective view of part of a rechargeable battery according to another embodiment of the invention.
FIG. 7 is a cross-sectional view taken along line VII-VII in FIG. 6.
FIG. 8 is another exploded perspective view of part of a rechargeable battery according to another embodiment of the invention.
FIG. 9 is a cross-sectional view taken along line IX-IX in FIG. 8.
FIG. 10 is another exploded perspective view of part of a rechargeable battery according to another embodiment of the invention.
FIG. 11 is a cross-sectional view taken along line XI-XI in FIG. 10.
FIG. 12 is an exploded perspective view of part of a rechargeable battery according to a further embodiment of the invention.
FIG. 13 is a cross-sectional view taken along line XIII-XIII in FIG. 12.
FIG. 14 is an exploded perspective view of part of a rechargeable battery according to a still further embodiment of the invention.
FIG. 15 is a cross-sectional view taken along the line XV-XV in FIG. 14.

### DETAILED DESCRIPTION

Embodiments of the present invention will be described more fully hereinafter with reference to the accompanying drawings. As those skilled in the art would realize, the described embodiments may be modified in various different ways without departing from the scope of the present invention.

In the drawings, dimensions of layers, regions, etc., are exaggerated for clarity. It will be understood that when one layer or one element is considered to as being "on" another element, it can be directly on the other element or intervening elements may also be present therebetween. Further, it will be understood that when one layer or one element is considered to as being "under" another element, it can be directly on the other element or at least one intervening element may also be present therebetween. In addition, it will be understood that when one layer is considered to as being "between" two layers, it can be a unique layer between two layers or at least one layer may also be present therebetween. Like reference numerals designate like elements throughout the specification and the drawings.

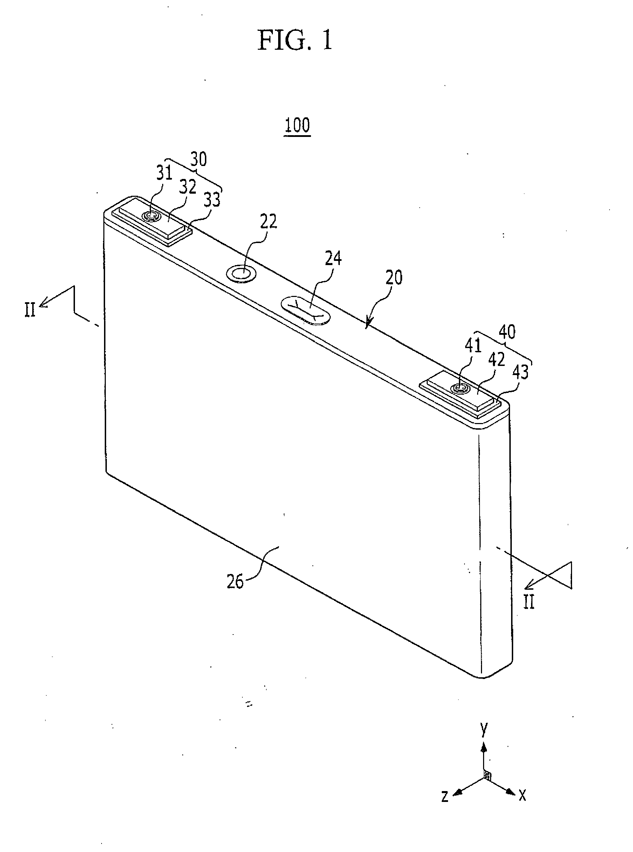

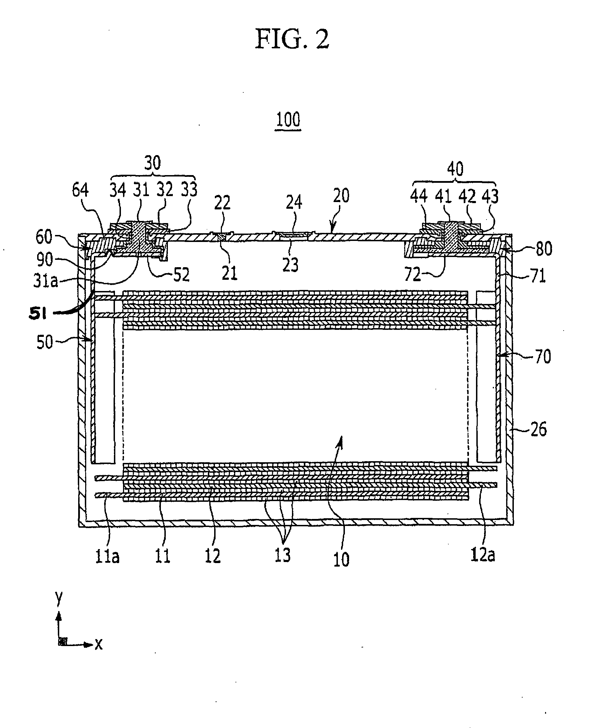

Referring to FIGS. 1 and 2, a rechargeable battery 100 includes an electrode assembly 10 formed by a first electrode 11 and a second electrode 12, wound together with a separator 13 therebetween. A case 26 accommodates the electrode assembly 10. A first terminal part 30 and a second terminal part 40 are electrically connected to the electrode assembly 10 and a first electrode current collecting member 50 and a second electrode current collecting member 70 respectively. A cap plate 20 is coupled to an opening formed in the case 26. First and second lower insulating members 60 and 80 are installed in the case 26, and an elastic structure 90 is coupled to a fuse part formed in the first electrode current collecting member 50.

The rechargeable battery 100 is a lithium ion rechargeable battery. However, the present invention is not limited thereto and may be applied to a battery such as a lithium polymer battery, or the like.

The first electrode 11 may be a negative electrode and the second electrode 12 may be a positive electrode, and vice versa.

The electrode assembly 10 is wound with the first electrode 11, the second electrode 12, and the separator 13 together to form a jelly roll type. Each of the first electrode 11 and the second electrode 12 includes a current collector formed of a thin metal foil and an active material coated on a surface of each current collector. The first electrode 11 and the second electrode 12 are each partitioned into a coating part, in which the active material is coated on the current collector, and an uncoated region 11a, 12a in which the active material is not coated on the current collector. The coating part forms a substantial portion of the first electrode 11 and the second electrode 12 in the electrode assembly 10 and the first electrode uncoated region and the second uncoated region 11a and 12a each are disposed at a respective side of the coating parts in the jelly roll state.

The present invention is not limited to a jelly roll structure. The electrode assembly 10 may alternatively have a structure in which the first electrode 11 and the second electrode 12 are each formed of a plurality of sheets that are stacked with the separator 13 therebetween.

The first electrode uncoated region 11 a of the electrode assembly 10 is electrically connected to the first terminal part 30 via the first electrode current collecting member 50 and the second electrode uncoated region 12a is electrically connected to the second terminal part 40 via the second electrode current collecting member 70. The case 26 has an approximately rectangular parallelepiped shape and includes an opening formed in one surface thereof. However, the present invention is not limited thereto and the case may have various shapes, such as a cylindrical shape, a pouch shape, or the like.

The cap plate 26 is formed of a thin plate and is coupled to the opening of the case 26 to seal the opening. In addition, the cap plate 20 is provided with an electrolyte solution inlet 21 that enables injection of an electrolyte solution into the sealed case 26. The electrolyte solution inlet 21 is sealed by a sealing closure 22 after the electrolyte solution is injected. Further, the cap plate 20 is provided with a vent hole 23 mounted with a vent plate 24 that is fractured when an internal pressure of the sealed case 26 is a set pressure or more.

The first and second terminal parts 30 and 40 respectively include first and second rivets 31 and 41 and first and second terminal plates 32 and 42. A first terminal insulating member 33 is disposed between the first terminal plate 32 and the cap plate 20. A conductive connection member 43 is disposed between the second terminal plate and the cap plate 20. First and second gaskets 34 and 44 are respectively provided between the rivets and the cap plate 20. In this configuration, the first and second rivets 31 and 41 include first and second pillar parts 31a and 41a and first and second flange parts 31b and 41 b.

According to this embodiment, since the cap plate 20 may be electrically connected to the second terminal part 40 by the conductive connection member 43, it may have the polarity of the positive electrode or the negative electrode.

The first and second electrode current collecting members 50 and 70 respectively include first and second electrode coupling parts 51 and 71 coupled to the first and second electrodes 11 and 12 and first and second terminal coupling parts 52 and 72 coupled to the first and second terminal parts 30 and 40.

In addition, a resilient separation member 90 is coupled to the first electrode current collecting member 50.

In this configuration, the structure of the first and second terminal parts 30 and 40, the structure of the first and second electrode current collecting members 50 and 70 and first and second lower insulating members 60 and 80 are the same. Therefore, a description of the second terminal part 40, the second electrode current collecting member 70, and the second lower insulating member 80 will be omitted.

In an alternative embodiment, the first terminal part 30 may include a cylinder shaped terminal (not shown) rather than a plate type of terminal. Further, an insulating member instead of the conductive connection member 43 may be also installed between the cap plate 20 and the second rivet 41. Therefore, the cap plate 20 may not be electrically connected to the second terminal part 40.

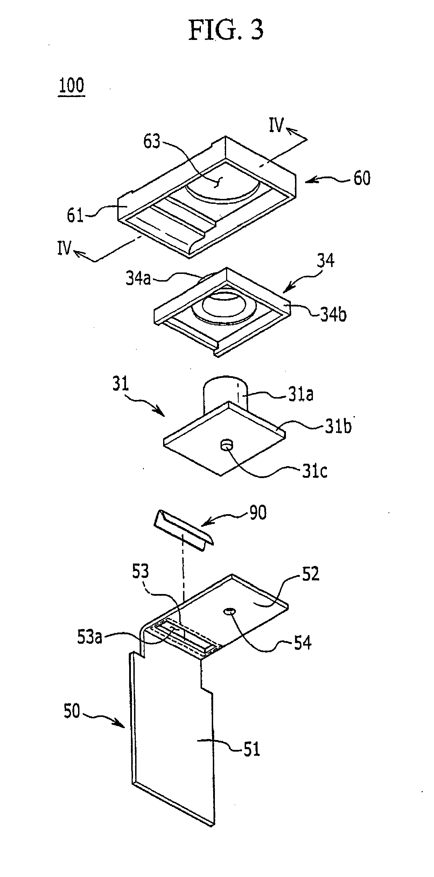

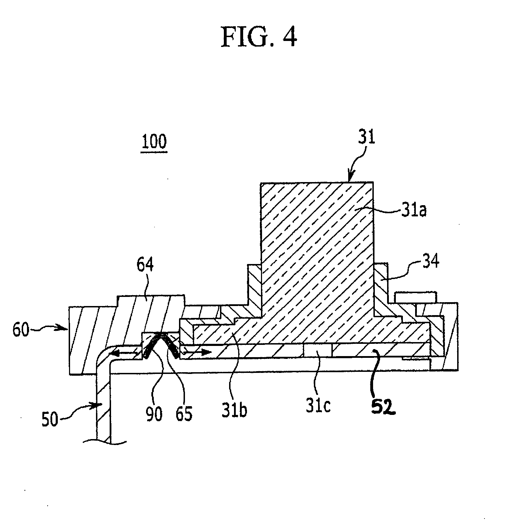

Referring to FIGS. 3 and 4, the first rivet 31 includes the pillar part 31a, the rivet flange part 31 b, and a protrusion 31 c formed on the rivet flange part 31b.

In addition, the first gasket 34 includes a body 34a having a through-hole formed therein and a gasket flange part 34b.

The first lower insulating member 60 includes a body 61, a coupling groove 65, a through-hole 63 having the rivet 31 penetrating therethrough, and a plurality of fixing protrusions 64 fixed to a plurality of protrusion grooves 25 formed in the cap plate 20.

The first electrode current collecting member 50 includes a first electrode coupling part 51 coupled to the first electrode 11 and a first terminal coupling part 52. In this case, the first terminal coupling part 52 is provided with a fuse part 53 and a rivet coupling groove 54.

As shown in FIG. 4, the first gasket 34 is inserted into the coupling groove 65 of the first lower insulating member 60, and the pillar part 31 a of the first rivet 31 is inserted into the coupling groove 65 of the first lower insulating member 60 while penetrating through the body 34a of the first gasket 34 having the through-hole formed therein and the through-hole 63 of the first lower insulating member 60.

The first electrode current collecting member 50 is inserted into the coupling groove 65 of the first lower insulating member 60, and the protrusion 31 c formed in the first rivet 31 is inserted into the rivet coupling groove 54 of the first electrode current collecting member 50. The protrusion 31 c is coupled to the rivet coupling groove 54 in a press-fitting manner or it may be inserted into the rivet coupling groove 54 and be then fixed thereto through welding.

The first terminal coupling part 52 of the first electrode current collecting member 50 is provided with the fuse part 53 that is intended to be fused or fractured when an overcurrent occurs in the rechargeable battery 100.

The fuse part 53 is provided with a fuse hole 53a. Therefore, a portion in which the fuse part 53 is formed has a cross sectional area smaller than those of other portions of the first terminal coupling part 52 in which the fuse part 53 is not formed. As a result, when the overcurrent occurs in the rechargeable battery 100, the fuse part 53 may be fused or fractured by the overcurrent. Therefore, flow of the current in the rechargeable battery 100 may be blocked.

The resilient separation member 90 is made of a material having elasticity and is installed in the fuse part 53 to allow its inherent elastic force to act on the fuse part 53.

Hereinafter, a process in which the elastic structure 90 is installed in the fuse part 53 to allow elastic force to act on the fuse part 53 will be described in detail.

The elastic structure 90 according to this embodiment is formed by bending a lamina, in this case a plate, having a predetermined thickness and made of an elastic material at a predetermined angle around a central portion thereof. The resulting structure includes a pair of formations having end portions that are spaced apart from each other, but may resiliently flex towards and away from each other.

Both end portions of the elastic structure 90 may contact one surface of the fuse hole 53a. In addition, a central portion of the elastic structure 90 is inserted into an elastic structure coupling groove 65 formed in the first lower insulating member 60.

Therefore, when the elastic structure 90 is inserted into the fuse hole 53a, the elastic force of the elastic structure 90 may act in a direction toward the outside of the fuse hole 53a (an arrow direction of FIG. 4).

Generally, when such a fuse part 53 is partially fused, melted or fractured due to the generation of the overcurrent in the rechargeable battery 100 or when fractured surfaces of the fuse part 53 are excessively close to each other, an abnormal phenomenon such as arc generation between the fractured surfaces, or the like, may occur. On the other hand, with the elastic structure 90 in place, a distance between the fractured surfaces of the fuse part 53 may be sufficiently maintained so that the abnormal phenomenon such as the arc, or the like, does not occur.

That is, the elastic force of the elastic structure 90 acts in the direction toward the outside of the fuse hole (the arrow direction of FIG. 4), such that a distance so that the fractured surfaces may not be electrically connected to each other may be maintained. If the fractured surfaces of the fuse part 53 move, or if melting occurs, the elastic structure 90 can even expand fully or partly back to its pre-insertion shape, such as shown in broken lines in FIG. 4.

As a result, according to this embodiment, the size of the fuse hole 53a formed in the fuse part 53 may be freely designed without being limited by the strength of the first electrode current collecting member 50 or the size of a cross sectional area of the fuse part 53, such that a degree of freedom in design of the fuse part 53 may be optimized.

Although the above embodiment describes a case in which the fuse part 53 having the fuse hole 53a formed therein is formed in the first electrode current collecting member 50, the fuse part having the fuse hole formed therein may also be formed in the second electrode current collecting member 70. In this case, an elastic structure having the same configuration as that of the elastic structure 90 may be coupled to the fuse part of the second electrode current collecting member 70.

In addition, the present invention is not limited to a case in which the elastic structure 90 is inserted into the fuse hole 53a. For example, the elastic structure 90 may be installed so that it contacts another portion of the fuse part 53, thereby allowing elastic force to act on the fuse part 53.

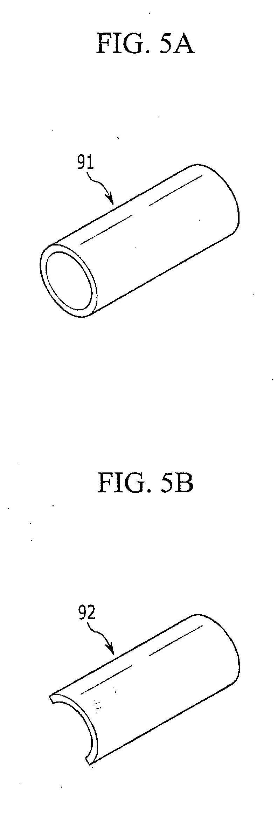

FIGS. 5A and 5B are perspective views of a further examples of a separation member according to the invention.

Referring to FIGS. 5A and 5B, the separation members each take the form of a resilient member. The resilient members are respectively formed as elastic structures 91 and 92. The first elastic structure 91 has a cylindrical shape in which a hollow part is formed and the second elastic structure 92 has a shape formed by cutting in half a cylindrical shaped elastic structure in which a hollow part is formed.

Elastic member 91 therefore has an O-shaped cross-section and member 92 has a C-shaped cross-section. However, a shape of the separation members is not limited to a cylindrical shape or a semi-cylindrical shape. That is, the separation member may have any shape, as long as it provides a resilient force that prevents unwanted contact of parts of the fuse part. For example, the elastic structure may have a cross section having a triangular shape, a rectangular shape, or the like.

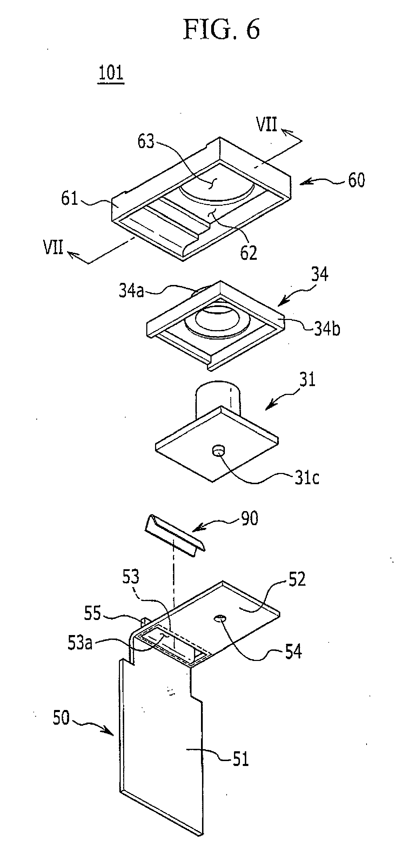

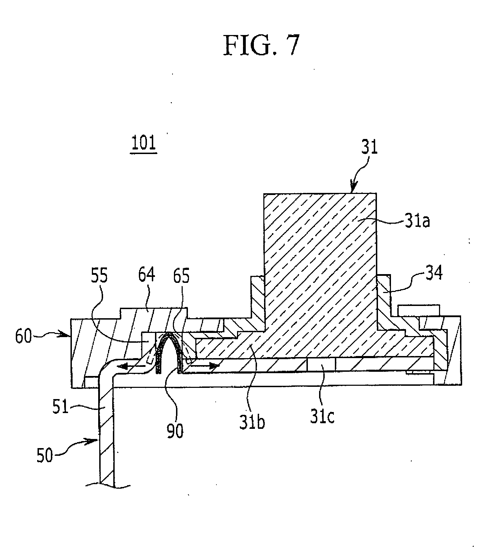

FIG. 6 is a partially exploded perspective view of part of a rechargeable battery according to another embodiment of the invention and FIG. 7 is a cross-sectional view taken along line VII-VII of FIG. 6.

The rechargeable battery of FIGS, 6 and 7 has the same configuration as that of the rechargeable battery 100 according to the first embodiment except for the configuration of its first electrode current collecting member 50.

Referring to FIGS. 6 and 7, the first electrode current collecting member 50 further includes a support protrusion 55 in the form of a wall that projects from an edge region of the fuse hole 53a of the fuse part 53.

Therefore, when the elastic structure 90 is inserted into the fuse hole 53a, one surface of the elastic structure 90 may be supported by the support protrusion 55 in an opposite direction to a direction in which elastic force acts. In this configuration, when the fuse part 53 is fused or fractured by the overcurrent, the elastic force may be transferred through the support protrusion 55 in a direction toward the outside of the fuse hole 53a (an arrow direction of FIG. 7). As a result, according to this embodiment, the contact area between the support protrusion 55 and the elastic structure 90 is increased, such that the elastic force of the elastic structure 90 may be more effectively transferred to the fuse part 53. Therefore, a distance between fractured surfaces of the fuse part 53 may be sufficiently maintained so that an abnormal phenomenon such as an arc, or the like, does not occur. The support protrusion 55 is not limited to being formed to protrude only from one edge region of the fuse hole 53a as in this embodiment. One or more such protrusions may be formed to protrude from more than one edge region of the fuse hole 53a.

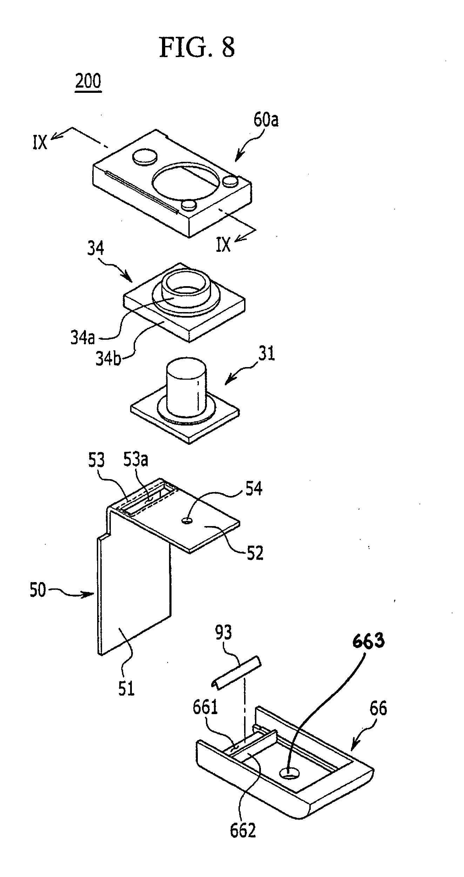

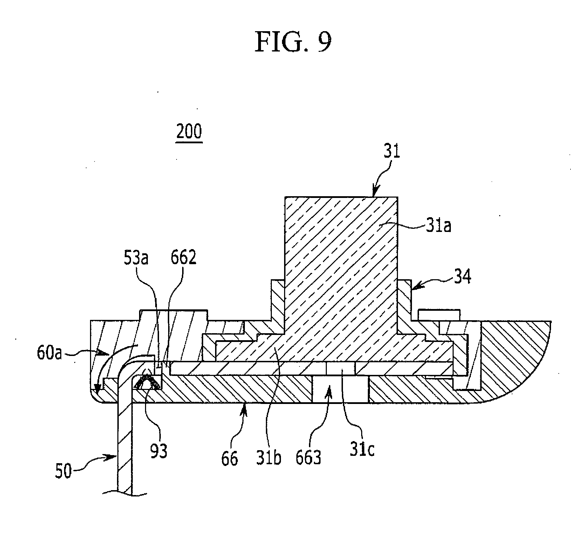

FIG. 8 is a partially exploded perspective view of part of a rechargeable battery according to a further embodiment of the invention and FIG. 9 is a cross-sectional view taken along line IX-IX of FIG. 8.

The rechargeable battery 200 according to this embodiment has the same configuration as that of the rechargeable battery 100 according to the first embodiment except for the addition of a first lower insulating member supporting member 66, the shape of the separation member 93, and the configuration of the first lower insulating member 60a.

The first lower insulating member 60a according to this embodiment has the same configuration as that of the first lower insulating member 60 according to the first embodiment except that the elastic structure coupling groove 65 is not formed. Referring to FIGS. 8 and 9, the rechargeable battery 200 according to this embodiment further includes the first lower insulating member supporting member 66 coupled to the first lower insulating member 60a and an elastic structure 93 inserted into the first lower insulating member supporting member 66.

In this configuration, the first lower insulating member supporting member 66 includes an elastic structure coupling hole 661, a fuse hole coupling protrusion 662, and a gas discharging hole 663.

The separation member 93 according to this embodiment is formed by bending a lamina having a predetermined thickness and made of an elastic material at a predetermined angle based on a central portion thereof, similar to the elastic structure 90 according to the first embodiment. The primary difference between the separation member 93 of this embodiment and that of the first embodiment is that the structure 93 of this embodiment is smaller in cross-section.

Therefore, when the elastic structure 93 is coupled to a lower portion of the first lower insulating member 60a in a state in which it is inserted into the elastic structure coupling hole 661, the elastic structure 93 may be positioned between the first lower insulating member supporting member 66 and the first electrode current collecting member 50. In addition, the fuse hole coupling protrusion 662 formed in the first lower insulating member supporting member 66 may be inserted into the fuse hole 53a.

A bent portion of the elastic structure 93 is installed to about the first electrode current collecting member 50 closely at a location that is adjacent to a portion in which the fuse part 53 is formed.

Therefore, when the fuse part 53 is fused or fractured due to the generation of the overcurrent in the rechargeable battery 200, a portion of the first electrode current collecting member 50 may be moved by the elastic force generated in the elastic structure 93 in a counterclockwise direction (an arrow direction of FIG. 9).

In addition, according to the fuse hole coupling protrusion 662, electrical connection between the fractured surfaces formed after the fuse part 53 is fused or fractured may be effectively prevented.

In addition, gas generated in the fused or fractured fuse part 53 may be discharged through the gas discharging hole 663 formed in the first lower insulating member supporting member 66.

Therefore, according to this embodiment, a distance between the fractured surfaces of the fuse part 53 formed due to the overcurrent may be sufficiently maintained so that the abnormal phenomenon such as the arc, or the like, does not occur, and the gas generated in the first lower insulating member 60a may be effectively discharged.

As a result, according to the exemplary embodiment, the size of the fuse hole 53a formed in the fuse part 53 may be freely designed without being limited by strength of the first electrode current collecting member 50 or the size of a cross sectional area of the fuse part 53, such that a degree of freedom in design of the fuse part 53 may increase.

As in other embodiments, the shape of the separation member is not limited to the shape of the elastic structure 93. Instead, the separation member may have a wide variety of other cross-sections, including a circular shape, an arcuate shape, a triangular shape, a square or rectangular shape and the like, as long as the elastic force may be generated.

Although this embodiment describes a case in which the fuse part 53 having the fuse hole 53a formed therein is formed in the first electrode current collecting member 50, the fuse part 53 having the fuse hole 53a formed therein may also be formed in the second electrode current collecting member 70. In this configuration, an elastic structure having the same configuration as that of the elastic structure 93 may be coupled to the fuse part of the second electrode current collecting member 70.

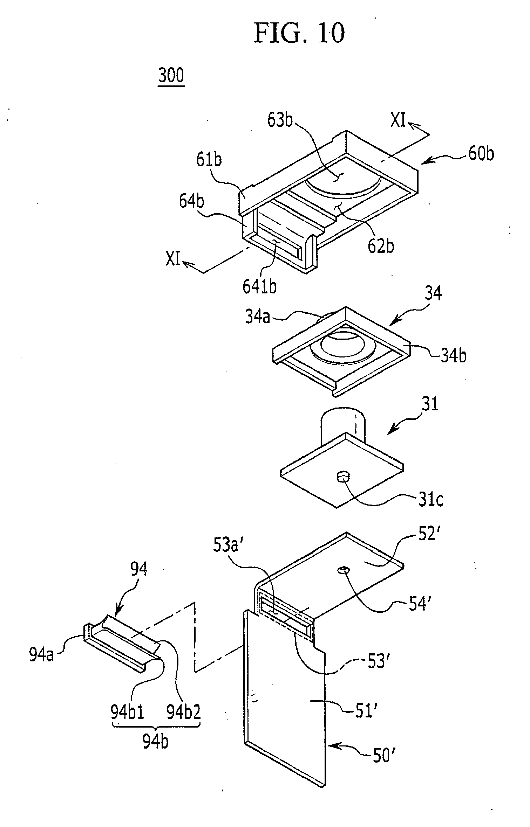

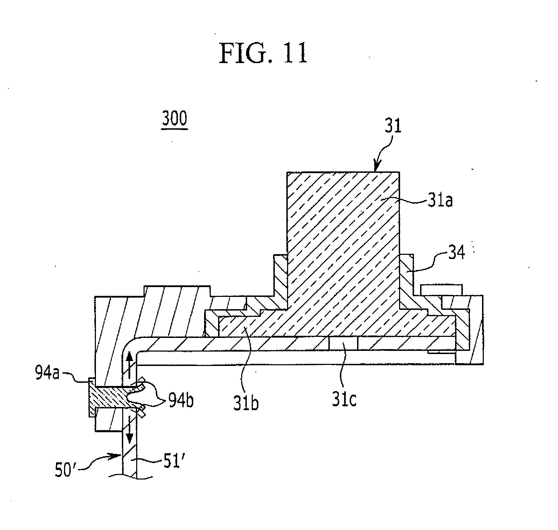

FIG. 10 is an exploded perspective view of part of a rechargeable battery according to a further embodiment and FIG. 11 is a cross-sectional view taken along line XI-XI of FIG. 10.

The rechargeable battery 300 according to this embodiment has the same configuration as that of the rechargeable battery 100 according to the first embodiment except for the configuration of the first lower insulating member 60b, the configuration of the first electrode current collecting member 50', and the configuration of the elastic structure 94 which serves as a separation member in this embodiment.

Referring to FIGS. 10 and 11, the first lower insulating member 60b according to this embodiment includes the lower protruding part 64b formed to extend from one side thereof in a direction toward the electrode assembly 10.

In addition, the first electrode current collecting member 50' includes a first electrode coupling part 51' coupled to the first electrode 11 and a first terminal coupling part 52'. In this configuration, the first electrode coupling part 51' is formed to extend from one side end region of the first terminal coupling part 52' in a direction approximately perpendicular to the first terminal coupling part 52'.

In this case, the first electrode coupling part 51' of the first electrode current collecting member 50' is provided with the fuse part 53' that may be fused or fractured when an overcurrent occurs in the rechargeable battery 300. In addition, the fuse part 53' according to this embodiment is provided with a fuse hole 53a'.

The elastic structure 94 according to this embodiment includes a body 94a and a fuse hole coupling part 94b. In this configuration, the fuse hole coupling part 94b includes a pair of formations defined by elastic branches 94b1 and 94b2 formed on one end of the body part 94a so as to be spaced apart from each other by a predetermined distance.

After the body 94a of the elastic structure 94 is coupled to the elastic structure coupling hole 641 b formed in the lower protruding part 64b of the first lower insulating member 60b, the pair of elastic branches 94b1 and 94b2 is inserted into the fuse hole 53a'.

Therefore, as shown in FIG. 11, elastic force generated by the pair of elastic branches 94b1 and 94b2 acts on one surface of the fuse hole 53a'.

In this configuration, when an overcurrent occurs in the rechargeable battery 300, the fuse part 53' may be fused or fractured. In this case, the elastic force generated by the pair of elastic branches 94b1 and 94b2 of the elastic structure 94 may act in a direction toward the outside of the fuse hole 53a' (an arrow direction of FIG. 11).

Therefore, a distance between fractured surfaces of the fuse part 53 formed due to the overcurrent may be sufficiently maintained so that an abnormal phenomenon such as the arc, or the like, does not occur.

As the first electrode coupling part 51' is formed to be bent in a direction approximately perpendicular to the first terminal coupling part 52', when the fuse part 53' is fused or fractured, the elastic branches 94b1 and 94b2 of the elastic structure 94 may serve to completely separate the first electrode coupling part 51' and the first terminal coupling part 52' from each other.

Therefore, according to this embodiment, a degree of freedom in design of the fuse part 53' may increase without being limited by a material of the first electrode current collecting member 50' or a size or a position of the fuse part 53', or the like. However, the elastic branches 94b1 and 94b2 of the elastic structure 94 is not limited to having the shape according to this embodiment. Therefore, a portion inserted into the fuse hole 53a' may have a circular shape, an oval shape, an arcuate shape, a triangular shape, a rectangular shape, a square shape or the like, as long as the elastic force may act on the fuse hole 53'.

Although the above embodiment describes a case in which the fuse part 53' having the fuse hole 53a' formed therein is formed in the first electrode current collecting member 50', the fuse part 53 having the fuse hole 53a formed therein may also be formed in the second electrode current collecting member 70. In this configuration, an elastic structure having the same configuration as that of the elastic structure 94 according to the above embodiment may be coupled to the fuse part of the second electrode current collecting member 70.

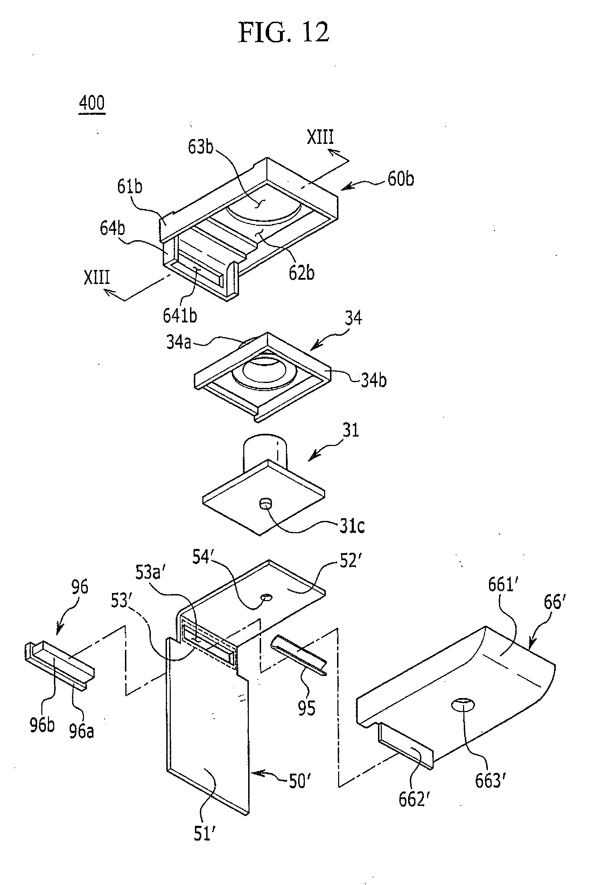

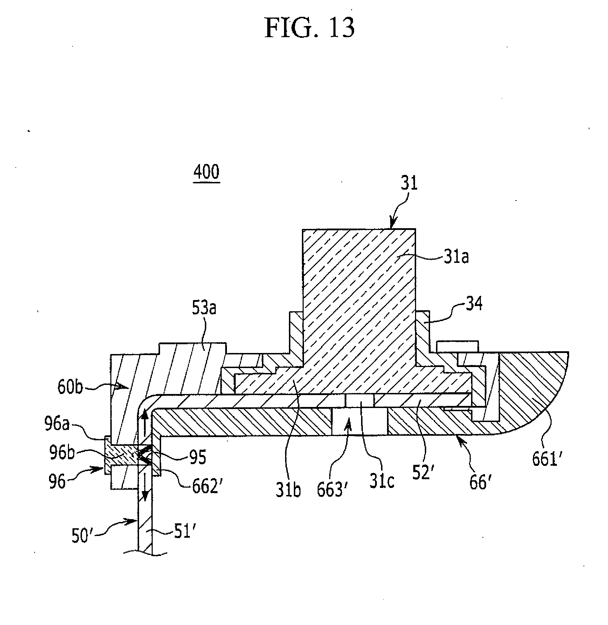

FIG. 12 is an exploded perspective view of part of a rechargeable battery according to a fourth embodiment and FIG. 13 is a cross-sectional view taken along line XIII-XIII of FIG. 12.

The rechargeable battery 400 according to this embodiment has the same configuration as that of the rechargeable battery 300 according to the third embodiment except for the inclusion of a first lower insulating member supporting member 66', the configuration of the elastic structure 95, and the inclusion of an elastic structure fixing member 96, serving as a retaining member for the elastic structure.

The elastic structure 95 according to this embodiment has the same configuration as that of the elastic structure 90 according to the first embodiment. Therefore, a detailed description of the elastics structure 95 will be omitted below.

Referring to FIGS. 12 and 13, the first lower insulating member supporting member 66' according to this embodiment includes a body 661', an elastic structure support protrusion 662', and a gas discharging hole 663'.

Further, the elastic structure fixing member 96 according to this embodiment includes a fixing member body 96a and a fixing member protrusion 96b.

Further, a first electrode coupling part 51' of the first electrode current collecting member 50' according to this embodiment includes a fuse part 53' provided with a fuse hole 53a' as in the above embodiment.

The fuse part 53' provided with the fuse hole 53a' is positioned between the lower protruding part 64b of the first lower insulating member 60b and the elastic structure support protrusion 662'. In addition, the elastic structure 95 is inserted into the fuse hole 53a' while being supported by the elastic structure support protrusion 662'.

In this configuration, the elastic structure fixing member 96 may be coupled to the elastic structure coupling hole 641b formed in the lower protruding part 64b of the first lower insulating member 60b. Therefore, when a bent portion of the elastic structure 95 is pressed by the fixing member protrusion 96b of the elastic structure fixing member 96, the elastic structure 95 shown in a dotted line may be deformed to have a shape of the elastic structure 95 as shown in FIG. 13. As a result, both ends of the deformed elastic structure 95 contact one surface of the fuse hole 53a', such that elastic force of the elastic structure 95 acts in a direction toward the outside of the fuse hole 53a' (an arrow direction of FIG. 13).

Therefore, with the elastic structure 95 according to this embodiment, a distance between the fractured surfaces that are partially fused or fractured due to the overcurrent may be sufficiently maintained so that the abnormal phenomenon such as the arc, or the like, does not occur.

As a result, according to this embodiment, the size of the fuse hole 53a' formed in the fuse part 53' may be freely designed without being limited by strength of the first electrode current collecting member 50' or a size of a cross section area of the fuse part 53', such that a degree of freedom in design of the fuse part 53' may be optimized.

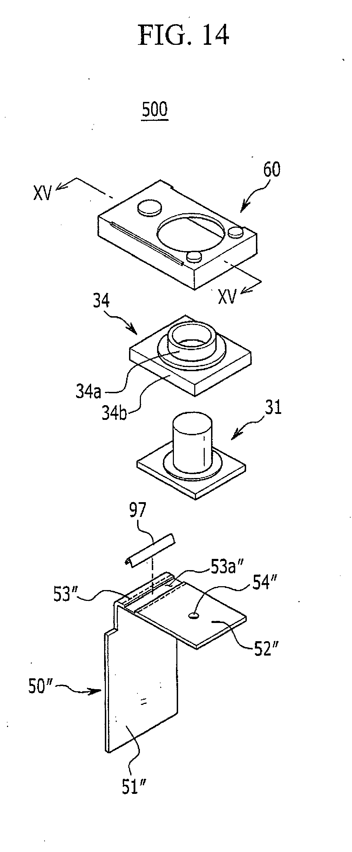

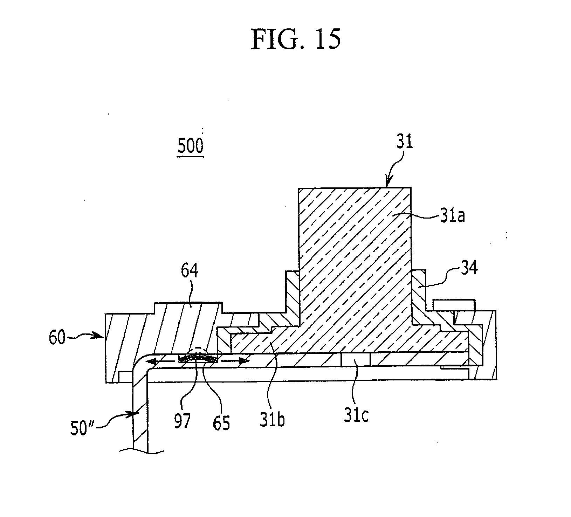

FIG. 14 shows an exploded view of part of a rechargeable battery according to a further embodiment of the invention. FIG. 15 is a cross-sectional view taken along the line XV-XV FIG. 14.

The rechargeable battery 500 according to this embodiment has generally the same configuration as the embodiment of FIG. 1. The primary difference between this embodiment and that embodiment is that the first collection member 50" is provided with a fuse part 53a"in the form of a fuse recess in the first terminal coupling part 52", rather than a fuse hole.

The separation member 97 takes the form of an elastic member having a generally V-shaped cross-section, as in the embodiment of FIG 1. In this case, however, the elastic member 97 is smaller than the elastic member 90 of the embodiment of FIG. 1, because it is accommodated within a recess, rather than a hole.

The first lower insulating member 60 lacks the elastic member coupling groove 65 of the embodiment of FIG. 1. However, in alternative embodiments, such a coupling groove may be provided.

In use, end portions of the elastic member 97 are urged against the edges of the fuse recess 53a" due to the natural resilience of the elastic member 97. As a consequence, when an overcurrent causes the fuse part to melt, fracture or deform in some other way, the elastic member 97 ensures that the separated parts of the first collection member 50"remain separated from each other in order to preserve the electrical interruption and avoid problems such as an arc or the like.

As a consequence of the presence of the elastic member 97, the shape and configuration of the fuse recess 53a"may be selected with relative design freedom, as with other embodiments discussed above.

While this disclosure has been described in connection with what is presently considered to be practical embodiments, it is to be understood that the invention is not limited to the disclosed embodiments, but, on the contrary, is intended to cover various modifications and equivalent arrangements included within the scope of the appended claims.

## Claims

1. A rechargeable battery (100), comprising:
a case (26);
an electrode assembly (10) situated within the case (26);
a current collecting member (50) electrically connected to the electrode assembly (10);
a fuse part (53) comprising a fuse hole (53a), provided between a first and a second part (51, 52) of said current collecting member (50), and adapted to change structurally in the event of an overcurrent
**characterized in that** a resilient separation member (90) situated in or adjacent the fuse part (53) for maintaining a separation between the first and the second part (51, 52) of the current collecting member (50) after the fuse part has structurally changed is at least partially situated within the fuse hole (53a).

2. A rechargeable battery (100) according to claim 1, wherein the separation member (90) is formed from an elastic material.

3. A rechargeable battery (100) according to claim 1 or 2, wherein the separation member (90) comprises first and second formations which are spaced apart from each other in at least a portion thereof.

4. A rechargeable battery (100) according to claim 3, wherein the separation member (90) comprises a lamina that is bent to form a bend with the first and second formations on either side of the bend.

5. A rechargeable battery (100) according to claim 4, wherein the separation member (90) has a triangular, circular or arcuate cross-section.

6. A rechargeable battery (100) according to claim 5, wherein the separation member (90) comprises a body portion having the first and second formations situated in an edge region thereof.

7. A rechargeable battery (100) according to any one of claims 3 to 6, wherein the first and second formations are at least partly located within the fuse hole (53a) and compressed toward each other in a direction extending from one side of the fuse hole to an opposite side of the fuse hole (53a).

8. A rechargeable battery (100) according to claim 7, wherein the fuse hole (53a) comprises a wall (55) projecting from an edge region thereof and either the first formation or the second formation at least partially abuts the wall.

9. A rechargeable battery (100) according to one of claims 6 to 8, wherein the separation member (90) is retained within the fuse hole (53a) by a retaining member (96).

10. A rechargeable battery (100) according to one of claims 1 to 6, wherein the separation member (93) is located adjacent the fuse part (53) for exerting a rotational force upon either the first or second part of the current collecting member (50) after the fuse has structurally changed.

11. A rechargeable battery (100) according to any preceding claim, further comprising a support member (64) for retaining the position of the separation member (90).

12. A rechargeable battery (100) according to claim 11, comprising a cap plate (20) and a terminal portion (30) extending through the cap plate (20), the said current collecting member (50) being electrically connected with the terminal portion (30) and partly located between the support member (64) and the terminal portion (30).

13. A rechargeable battery (100) according to claim 12 when dependent upon claim 10, wherein the fuse part (53) comprises a fuse hole (53a) and the support member (64) comprises an extension portion that at least partly projects into the fuse hole (53a).

## Patentansprüche

1. Wiederaufladbare Batterie (100), aufweisend:
ein Gehäuse (26);
eine Elektrodenanordnung (10), die sich im Gehäuse (26) befindet;
ein Stromsammelelement (50), das mit der Elektrodenanordnung (10) elektrisch verbunden ist;
einen Sicherungsteil (53), der ein Sicherungsloch (53a) aufweist, das zwischen einem ersten und einem zweiten Teil (51, 52) des besagten Stromsammelelements (50) bereitgestellt wird und angepasst ist, um sich im Falle eines Überstroms baulich zu verändern,
**dadurch gekennzeichnet, dass** ein elastisches Trennelement (90), das sich im Sicherungsteil (53) befindet oder benachbart zu diesem ist, um nach der baulichen Veränderung des Sicherungsteils eine Trennung zwischen dem ersten und dem zweiten Teil (51, 52) des Stromsammelelements (50) aufrechtzuerhalten, sich zumindest teilweise im Sicherungsloch (53a) befindet.

2. Wiederaufladbare Batterie (100) nach Anspruch 1, wobei das Trennelement (90) aus einem elastischen Material ausgebildet ist.

3. Wiederaufladbare Batterie (100) nach Anspruch 1 oder 2, wobei das Trennelement (90) eine erste und zweite Ausbildung aufweist, die in zumindest einem Abschnitt derselben voneinander beabstandet sind.

4. Wiederaufladbare Batterie (100) nach Anspruch 3, wobei das Trennelement (90) ein Blatt aufweist, das gebogen ist, um eine Biegung mit der ersten und zweiten Ausbildung auf beiden Seiten der Biegung auszubilden.

5. Wiederaufladbare Batterie (100) nach Anspruch 4, wobei das Trennelement (90) einen dreieckigen, kreisförmigen oder bogenförmigen Querschnitt aufweist.

6. Wiederaufladbare Batterie (100) nach Anspruch 5, wobei das Trennelement (90) einen Körperabschnitt aufweist, der eine erste und zweite Ausbildung, die sich in einem Randbereich desselben befinden, aufweist.

7. Wiederaufladbare Batterie (100) nach einem der Ansprüche 3 bis 6, wobei die erste und zweite Ausbildung zumindest teilweise im Sicherungsloch (53a) angeordnet sind und in einer Richtung, die sich von einer Seite des Sicherungslochs zu einer gegenüberliegenden Seite des Sicherungslochs (53a) erstreckt, zueinander hin zusammengedrückt sind.

8. Wiederaufladbare Batterie (100) nach Anspruch 7, wobei das Sicherungsloch (53a) eine Wand (55) aufweist, die von einem Randbereich desselben vorragt und wobei entweder die erste Ausbildung oder die zweite Ausbildung zumindest teilweise an der Wand anliegt.

9. Wiederaufladbare Batterie (100) nach einem der Ansprüche 6 bis 8, wobei das Trennelement (90) durch ein Halteelement (96) im Sicherungsloch (53a) gehalten wird.

10. Wiederaufladbare Batterie (100) nach einem der Ansprüche 1 bis 6, wobei das Trennelement (93) benachbart zum Sicherungsteil (53) angeordnet ist, um nach der baulichen Veränderung der Sicherung eine Drehkraft auf entweder den ersten oder zweiten Teil des Stromsammelelements (50) auszuüben.

11. Wiederaufladbare Batterie (100) nach einem vorhergehenden Anspruch, weiterhin aufweisend ein Stützelement (64) zum Beibehalten der Position des Trennelements (90).

12. Wiederaufladbare Batterie (100) nach Anspruch 11, aufweisend eine Deckplatte (20) und einen Anschlussteil (30), der sich durch die Deckplatte (20) erstreckt, wobei das besagte Stromsammelelement (50) mit dem Anschlussteil (30) elektrisch verbunden ist und teilweise zwischen dem Stützelement (64) und dem Anschlussteil (30) angeordnet ist.

13. Wiederaufladbare Batterie (100) nach Anspruch 12, wenn dieser von Anspruch 10 abhängig ist, wobei der Sicherungsteil (53) ein Sicherungsloch (53a) aufweist und das Stützelement (64) einen Verlängerungsabschnitt, der zumindest teilweise in das Sicherungsloch (53a) ragt, aufweist.

## Revendications

1. Batterie rechargeable (100), comprenant :
un boîtier (26) ;
un ensemble d'électrode (10) situé à l'intérieur du boîtier (26) ;
un élément de collecte de courant (50) raccordé électriquement à l'ensemble d'électrode (10) ;
une partie de fusible (53) comprenant un trou de fusible (53a), prévu entre une première et une seconde partie (51, 52) dudit élément de collecte de courant (50), et adapté pour changer structurellement en cas de surintensité,
**caractérisée en ce qu'**un élément de séparation élastique (90) situé dans ou à côté de la partie de fusible (53) pour maintenir une séparation entre la première et la seconde partie (51, 52) de l'élément de collecte de courant (50) après que la partie de fusible a structuralement changé, est au moins partiellement situé à l'intérieur du trou de fusible (53a).

2. Batterie rechargeable (100) selon la revendication 1, dans laquelle l'élément de séparation (90) est formé à partir d'un matériau élastique.

3. Batterie rechargeable (100) selon la revendication 1 ou 2, dans laquelle l'élément de séparation (90) comprend des première et seconde formations qui sont espacées l'une de l'autre au niveau d'au moins une partie de ce dernier.

4. Batterie rechargeable (100) selon la revendication 3, dans laquelle l'élément de séparation (90) comprend une lamelle qui est pliée afin de former un coude avec les première et seconde formations de chaque côté du coude.

5. Batterie rechargeable (100) selon la revendication 4, dans laquelle l'élément de séparation (90) a une section transversale triangulaire, circulaire ou arquée.

6. Batterie rechargeable (100) selon la revendication 5, dans laquelle l'élément de séparation (90) comprend une partie de corps ayant des première et seconde formations situées dans sa région de bord.

7. Batterie rechargeable (100) selon l'une quelconque des revendications 3 à 6, dans laquelle les première et seconde formations sont au moins partiellement positionnées à l'intérieur du trou de fusible (53a) et comprimées l'une vers l'autre dans une direction s'étendant d'un côté du trou de fusible vers un côté opposé du trou de fusible (53a).

8. Batterie rechargeable (100) selon la revendication 7, dans laquelle le trou de fusible (53a) comprend une paroi (55) faisant saillie de sa région de bord et la première formation ou la seconde formation vient au moins partiellement en butée contre la paroi.

9. Batterie rechargeable (100) selon l'une quelconque des revendications 6 à 8, dans laquelle l'élément de séparation (90) est retenu à l'intérieur du trou de fusible (53a) par un élément de retenue (96).

10. Batterie rechargeable (100) selon l'une quelconque des revendications 1 à 6, dans laquelle l'élément de séparation (93) est positionné de manière adjacente à la partie de fusible (53) pour exercer une force de rotation sur la première ou la seconde partie de l'élément de collecte de courant (50) après que le fusible a structurellement changé.

11. Batterie rechargeable (100) selon l'une quelconque des revendications précédentes, comprenant en outre un élément de support (64) pour conserver la position de l'élément de séparation (90).

12. Batterie rechargeable (100) selon la revendication 11, comprenant une plaque formant capuchon (20) et une partie terminale (30) s'étendant à travers la plaque formant capuchon (20), ledit élément de collecte de courant (50) étant électriquement raccordé avec la partie terminale (30) et partiellement positionné entre l'élément de support (64) et la partie terminale (30).

13. Batterie rechargeable (100) selon la revendication 12, lorsqu'elle dépend de la revendication 10, dans laquelle la partie de fusible (53) comprend un trou de fusible (53a) et l'élément de support (64) comprend une partie d'extension qui fait au moins partiellement saillie dans le trou de fusible (53a).
